Europäisches Patentamt

European Patent Office

Office européen des brevets

(19)

(11) Numéro de publication : **0 221 825**
**B1**

(12)

# FASCICULE DE BREVET EUROPÉEN

(45) Date de publication du fascicule du brevet :
**03.01.90**

(51) Int. Cl.⁵ : **F 16 K  15/18, F 16 K  47/10**

(21) Numéro de dépôt : **86420247.8**

(22) Date de dépôt : **06.10.86**

(54) Ralentisseur de fluide hydraulique interposé entre des éléments distributeur et récepteur.

(30) Priorité : **09.10.85 FR 8515286**

(43) Date de publication de la demande :
**13.05.87 Bulletin 87/20**

(45) Mention de la délivrance du brevet :
**03.01.90 Bulletin 90/01**

(84) Etats contractants désignés :
**AT BE CH DE ES FR GB GR IT LI LU NL SE**

(56) Documents cités :
**DE—A— 1 960 709**
**GB—A—   762 219**
**US—A— 2 924 237**
**US—A— 3 605 808**
**US—A— 4 147 180**

(73) Titulaire : **Sorgi, Jean**
**1 rue Larionov**
**F-42100 Saint Etienne (FR)**

(72) Inventeur : **Sorgi, Jean**
**1 rue Larionov**
**F-42100 Saint Etienne (FR)**

(74) Mandataire : **Dupuis, François**
**Cabinet Charras 3 Place de l'Hôtel-de-Ville**
**F-42000 St.Etienne (FR)**

## Description

L'invention concerne un ralentisseur de fluide hydraulique interposé entre des éléments distributeur et récepteur.

L'objet de l'invention se rattache au secteur technique de la dynamique des fluides.

Dans le domaine de la distribution des fluides, il est souvent nécessaire de moduler le débit, en particulier de ralentir l'entrée du fluide dans le récepteur ou son retour dans le distributeur.

Pour atteindre ce but, on a bien proposé des solutions hydrauliques, mais en général ces réalisations n'empêchent pas le choc ou « coup de bélier » qui se produit souvent à ce niveau. On a également réalisé des ralentisseurs électroniques satisfaisants mais limités dans leurs applications, et de prix de revient très élevé.

On connaît le Brevet US-A-3 605 808 qui montre un ralentisseur de fluide hydraulique interposé entre des éléments distributeur et récepteur, le ralentisseur comprend un corps dont une des faces en bout présente un alésage aligné avec une canalisation d'arrivée du fluide, et recevant un piston monté à positionnement réglable ; ledit alésage communiquant par des orifices transversaux avec une canalisation de distribution du fluide au récepteur ; ledit piston présentant à son extrémité en regard de la canalisation d'arrivée, un moyen d'obturation unidirectionnel interdisant le passage du fluide à travers le piston dans le sens distributeur-récepteur, et un moyen de passage progressif du fluide.

Le Brevet US-A-4 147 180 montre aussi un ralentisseur de fluide hydraulique interposé entre des éléments distributeur et récepteur qui comprend un corps dont une des faces en bout présente un alésage aligné avec une canalisation d'arrivée du fluide, et recevant un piston monté à coulissement élastique étanche et à positionnement réglable ; ledit alésage communiquant avec une canalisation de distribution du fluide au récepteur ; ledit piston présentant à son extrémité en regard de la canalisation d'arrivée, un moyen d'obturation unidirectionnel interdisant le passage du fluide à travers le piston dans le sens distributeur-récepteur.

En outre, le Brevet US-A-2 924 237 montre un ralentisseur de fluide hydraulique interposé entre des éléments distributeur et récepteur qui comprend un corps dont une des faces en bout présente un alésage aligné avec une canalisation d'arrivée du fluide, et un élément monté étanche et à positionnement réglable ; ledit alésage communiquant par deux orifices transversaux situés à l'avant et à l'arrière du piston avec une canalisation de distribution du fluide au récepteur ; ledit piston présentant à son extrémité en regard de la canalisation d'arrivée un moyen d'obturation unidirectionnel interdisant le passage du fluide à travers le piston dans un sens et un moyen de passage progressif du fluide par recul du piston.

Le ralentisseur suivant l'invention assure de manière simple et économique le ralentissement du fluide en supprimant le coup de bélier.

A cet effet, selon une première caractéristique comme décrite dans la revendication 1, la ralentisseur comprend un corps dont une des faces en bout présente un alésage aligné avec la canalisation d'arrivée du fluide, et recevant un piston au moins partiellement creux et monté à coulissement élastique étanche et à positionnement réglable ; ledit alésage communiquant par trois orifices transversaux sélectifs situés à l'avant (premier orifice), au centre (deuxième orifice) et à l'arrière du piston (troisième orifice), avec une canalisation parallèle alignée avec la canalisation de distribution du fluide au récepteur ; ledit piston présentant à son extrémité en regard de la canalisation d'arrivée un moyen d'obturation unidirectionnel interdisant le passage du fluide à travers le piston dans le sens distributeur-récepteur, et un moyen de passage progressif du fluide par ledit premier orifice découvert par recul du piston, tandis qu'au retour le fluide peut passer par ledit deuxième orifice débouchant dans une partie centrale du piston aménagée pour autoriser le passage du fluide à travers le moyen d'obturation unidirectionnel.

Ces caractéristiques et d'autres encore ressortiront de la description qui suit.

Pour fixer l'objet de l'invention sans toutefois le limiter, dans le dessin annexé :

La figure 1 est une vue en coupe longitudinale du ralentisseur représenté en position de retour de fluide.

La figure 2 est une vue semblable à la figure 1 illustrant le ralentisseur en position de passage du fluide du distributeur vers le récepteur.

La figure 3 est une vue extérieure du piston selon l'invention.

La figure 4 est une vue en coupe partielle illustrant le guidage de la queue du piston.

La figure 5 est une vue considérée suivant la flèche F de la figure 4.

Afin de rendre plus concret l'objet de l'invention, on le décrit maintenant sous une forme non limitative de réalisation illustrée aux figures du dessin.

Le ralentisseur comprend un corps (1) par exemple de forme parallélépipédique, avec deux faces en bout (1a-1b). Sur la face (1a), débouche à la partie inférieure un alésage (1c) s'étendant sur une grande partie de la longueur, suivi d'un alésage de plus petit diamètre (1d) débouchant sur la face opposée (1b). Au-dessus de l'alésage (1c) s'étend parallèlement une canalisation (1e) débouchant sur les deux faces (1a-1b) avec sensiblement dans le milieu un étranglement (1f).

Dans l'alésage (1c) est monté à coulissement étanche un piston (2) dont l'extrémité arrière présente axialement un centrage (2a) recevant l'extrémité d'une queue (3) engagée également à coulissement étanche dans l'alésage (1d). Autour de la queue (3) s'enroule un ressort à boudins (4) placé en appui entre le fond de l'alésage (1c) et un chambrage (2b) du piston.

A l'avant, le piston (2) présente un chambrage (2c) dans lequel est logé un clapet (5) communiquant avec une partie centrale (2d) du piston de plus petit diamètre, par l'intermédiaire d'un trou débouchant (2e).

L'alésage (1c) et la canalisation (1e) communiquent entre eux par trois orifices transversaux, à savoir : un orifice (1g) situé près de la face en bout (1a), un orifice (1h) débouchant pour tous les cas de fonctionnement du ralentisseur, dans la partie centrale (2d) du piston, et un orifice (1i) débouchant derrière l'étranglement (1f) dans un alésage (1j) recevant un organe de réglage (6) du débit passant par l'étranglement.

La queue de piston (3) se prolonge à l'arrière par un épaulement (3a) suivi d'une portée filetée (3b), qui est vissée dans un chapeau (7) et retenue par un écrou (8), donc à positionnement réglable.

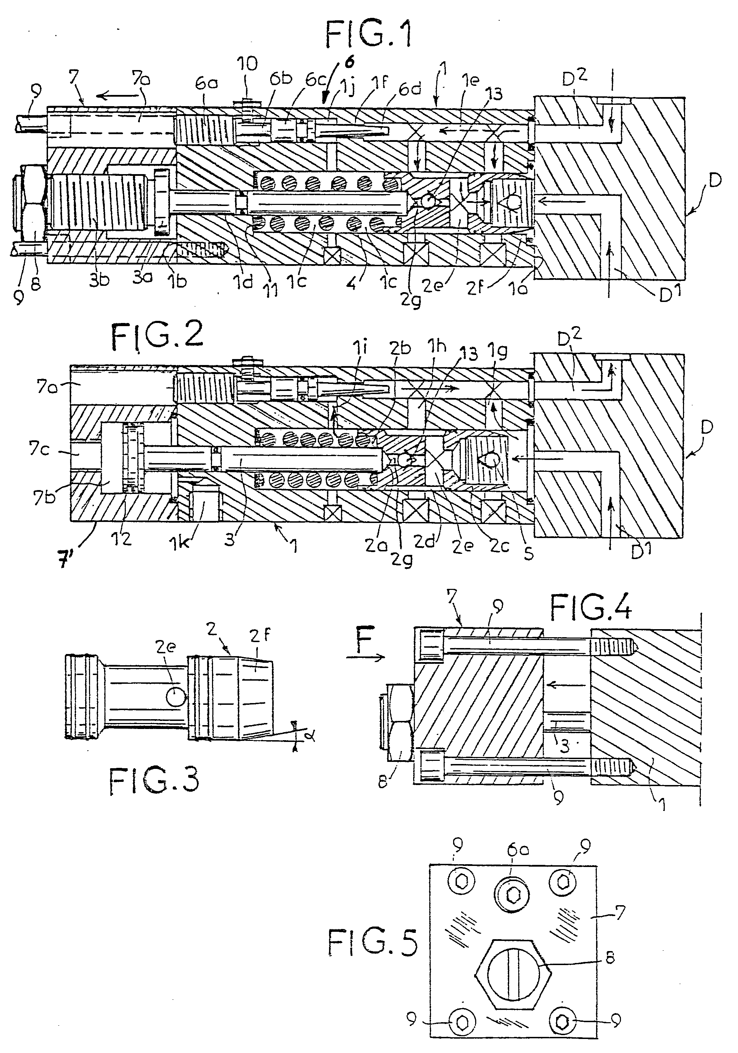

Ledit chapeau est guidé en translation par rapport au corps (1) lors des déplacements du piston, par tous moyens tels que longues vis (9) reliées au corps (figure 4), et présente également un orifice (7a) pour le passage d'un moyen de manœuvre de l'organe de réglage (6) qui présente à cet effet, une portée filetée (6a) se vissant dans l'extrémité taraudée de l'alésage (1j) puis une portée lisse de petit diamètre (6b) suivie d'une portée d'étanchéité (6c) et d'une extrémité conique (6d) traversant l'étranglement (1f). Une vis (10) s'interposant dans l'espace libre entre les portées (6a-6c), limite la course de réglage de l'étrangleur.

A noter encore qu'une ou plusieurs rondelles (11) peuvent être interposées entre le fond de l'alésage (1c) et le ressort (4) afin de régler précisément la course du piston.

D'une manière importante, le piston présente à son extrémité recevant le clapet (5), une portée extérieure (2f) de faible conicité entre 2°30 et 3°, dont l'utilité ressortira de la suite de la description. La partie arrière du piston (2) présente en outre, du côté du chambrage (2b), un orifice coaxial (2g) en communication avec le trou (2e), et dans lequel est logé un clapet (13), monté en opposition par rapport au clapet (5).

Le corps (1) ainsi agencé, est fixé par bride ou similaire (non représentée) à une plaque de distribution (D) reliant un élément récepteur à un élément distributeur bien connu, cela par l'intermédiaire d'une canalisation (D1) alignée avec l'alésage (1c) et d'une canalisation (D2) alignée avec la canalisation (1e).

On décrit maintenant en se référant plus particulièrement aux figures 1 et 2, le fonctionnement du ralentisseur selon l'invention.

Au repos (ou en phase retour), le piston (2) poussé par son ressort est en appui contre la plaque de distribution (D), et le fluide résiduel de l'élément distributeur remplit l'alésage (1c) derrière le piston (figure 1).

Lorsqu'on envoie sous pression un fluide par la canalisation (D1), le clapet (5) interdit son passage, et le piston (2) est repoussé à l'encontre de son ressort, ce qui provoque l'échappement du fluide par l'orifice (1i) et l'étranglement (1f). Lorsque la partie conique (2f) du piston arrive au niveau de l'orifice (1g) de communication, le fluide peut passer progressivement par cet orifice (figure 2) jusqu'à dégagement complet de l'orifice où le débit sera alors maximum. Le clapet (13), compte tenu du déplacement du piston (2), demeure fermé.

Lorsqu'on veut ramener le fluide à l'élément distributeur, le relâchement de la pression en (D1) assure le rappel du piston en position repos, et le fluide qui naturellement s'engage dans l'orifice (1g), ne peut passer du fait que le piston obture ledit orifice. Le fluide passe alors d'une part dans l'étranglement (1f), l'orifice (1i) et l'alésage (1c) et, d'autre part, dans l'orifice central (1h), puis dans l'espace central (2d) du piston pour traverser ledit piston par le trou (2e), puis le clapet (5) avant de retourner à l'élément distributeur par la canalisation (D1).

D'une manière importante, le clapet (13), au retour du piston, permet le passage du fluide au travers de l'orifice (2g) dans l'alésage (1c), afin de ramener beaucoup plus rapidement ledit piston (2) en position de repos. On obtient ainsi un temps de réponse très court.

A noter que la vitesse de déplacement du piston est fonction du diamètre de passage de l'étrangleur (6) et du tarage du ressort (4) ; elle peut donc être réglée très précisément par vissage ou dévissage.

On peut prévoir, sans sortir du cadre de l'invention, différentes variantes de réalisation des organes du ralentisseur, notamment, le piston et l'étrangleur peuvent être assistés électriquement, hydrauliquement ou autrement. Par exemple, comme illustré à la figure 2, la queue (3) du piston peut recevoir un deuxième piston (12) circulant dans un cylindre (7b) formé dans le chapeau fixe (7') et alimenté par une conduite (7c) de manière connue. Dans le cas où une contre-pression est nécessaire, une conduite d'alimentation (1k) est prévue sur le corps. La pression permanente en (7c) est réglable pour compenser la force du ressort à haute pression sur (D2).

Avec ce type d'assistance, le temps de réponse est plus rapide qu'avec le ressort seul, ce qui est intéressant pour des pressions élevées.

Les avantages ressortent bien de la description, on souligne encore :

— la progressivité de passage du fluide à l'admission par l'aménagement conique du piston ;

— la précision de commande possible grâce aux réglages de l'étrangleur et du ressort de rappel ;

— la suppression du coup de bélier.

**Revendications**

1. Ralentisseur de fluide hydraulique interposé entre des éléments distributeur et récepteur, le ralentisseur comprend un corps (1) dont une des

faces en bout (1a) présente une alésage (1c) aligné avec une canalisation d'arrivée (D1) du fluide, et recevant un piston (2) étant au moins partiellement creux et monté à coulissement élastique étanche et à positionnement réglable ; ledit alésage communiquant par trois orifices transversaux sélectifs (1g-1h-1i) situés à l'avant (premier orifice (1g)), au centre (deuxième orifice (1h)) et à l'arrière du piston (troisième orifice (1i)), avec une canalisation parallèle (1e) alignée avec une canalisation de distribution (D2) du fluide au récepteur ; ledit piston présentant à son extrémité en regard de la canalisation d'arrivée un moyen d'obturation unidirectionnel (5) interdisant le passage du fluide à travers le piston dans le sens distributeur-récepteur et un moyen de passage progressif du fluide par ledit premier orifice (1g) découvert par recul du piston, tandis qu'au retour le fluide peut passer par ledit deuxième orifice (1h) débouchant dans une partie centrale (2d-2e) du piston aménagée pour autoriser le passage du fluide à travers le moyen d'obturation unidirectionnel (5).

2. Ralentisseur selon la revendication 1, caractérisé en ce que le moyen de passage progressif du fluide est constitué par une portée extérieure conique (2f) du piston (2) découvrant progressivement ledit premier orifice (1g) lors du recul du piston sous la pression de fluide.

3. Ralentisseur selon la revendication 2, caractérisé en ce que la conicité de la portée extérieure (2f) du piston est de l'ordre de 2°30 à 3°.

4. Ralentisseur selon la revendication 1, caractérisé en ce que le piston (2) est rappelé en position avancée par un ressort à boudins (4) en appui sur le fond de l'alésage (1c) ; le tarage du ressort étant réglable par interposition d'une ou plusieurs rondelles (11).

5. Ralentisseur selon la revendication 1, caractérisé en ce que la course du piston (2) est réglable par liaison dudit piston avec une queue (3) dont l'extrémité arrière filetée (3b) coopère avec un chapeau (7) monté à coulissement guidé par rapport au corps (1) et avec blocage en position par un écrou (8).

6. Ralentisseur selon la revendication 1, caractérisé en ce que le fluide situé derrière le piston (2) et communiquant avec la canalisation parallèle (1e) par le troisième orifice (1i), passe par un organe de réglage du débit (6) qui est constitué par un étranglement (1f) de ladite canalisation parallèle (1e) et une vis, une extrémité conique (6d) de ladite vis (6) traverse ledit étranglement, la course de ladite vis est limitée et la position réglable.

7. Ralentisseur selon la revendication 6, caractérisé en ce que le piston (2) et l'organe de réglage de débit sont assistés de toute manière connue par hydraulique, électricité ou autre.

8. Ralentisseur selon la revendication 7, caractérisé en ce que le piston (2) est assisté hydrauliquement par un vérin constitué par un cylindre (7b) formé dans un chapeau fixe (7') avec une conduite d'alimentation (7c) et par un piston (12) formé en bout de la queue (3) du piston (2), avec éventuellement une conduite d'alimentation (1k)

pour assister le ressort (4).

9. Ralentisseur selon la revendication 1, caractérisé en ce que la partie arrière du piston (2) présente un orifice coaxial (2g) en communication avec la partie centrale (2d-2e) et dans lequel est logé un autre moyen d'obturation unidirectionnel (13) monté en opposition par rapport audit moyen (5).

## Claims

1. Slowing down device for hydraulic fluid, interposed between distributing and receiving elements, and including a body (1), one of the end faces (1a) of which has a bore (1c) in alignment with a fluid inlet conduit (D1), said body accommodating a piston (2) which is hollow in part and mounted for being shifted resiliently in a sealing manner and for being positioned adjustably, said bore communicating through three selective transverse orifices (1g-1h-1i) respectively situated forwardly (first orifice (1g)), centrally (second orifice (1h)) and rearwardly (third orifice (1i)) relative to the piston, with a parallel conduit (1e) in alignment with a distributing conduit (D2) for the distribution of the fluid to the receiving element ; said piston being provided, at the end thereof facing the inlet conduit, with unidirectional obturator means (5) preventing the passage of the fluid through the piston in the distributing means-receiving means direction, and with means for the gradual passage of the fluid through said first orifice (1g) becoming uncovered upon the backward motion of the piston, while upon the return motion thereof the fluid can be passed through the said second orifice (1h) opening into a central portion (2d-2e) of the piston, which is arranged for permitting the passage of the fluid through the unidirectional obturator means (5).

2. Slowing down device according to claim 1, characterized in that the gradual passage means for the fluid consists of a tapered external bearing face (2f) of the piston (2) which is uncovering gradually said first orifice (1g) upon the backward motion of the piston resulting from the pressure of the fluid.

3. Slowing down device according to claim 2, characterized in that the taper of the external bearing face (2f) of the piston is of the order of 2°30 to 3°.

4. Slowing down device according to claim 1, characterized in that the piston (2) is returned in the forward position by means of a coiled spring (4) in abutment on the bottom of the bore (1c), the setting of the spring being adjustable by interposing one or more washers (11).

5. Slowing down device according to claim 1, characterized in that the stroke of the piston (2) is adjustable by the connection of said piston with a shank (3), the screw-threaded rear end (3b) of which co-operates with a cap (7) mounted for guided sliding motion relative to the body (1) and with locking in position by means of a nut (8).

6. Slowing down device according to claim 1, characterized in that the fluid situated behind the piston (2) and communicating with the parallel conduit (1e) by means of the third orifice (1i) is passed through a flow adjusting organ (6) consisting of a necking (1f) of said parallel conduit (1e) and of a screw, a tapered end (6d) of said screw (6) extending through said necking, and the stroke of said screw being limited and the position being adjustable.

7. Slowing down device according to claim 6, characterized in that the piston (2) and the flow adjusting organ are assisted in any known manner by means of hydraulics, electrical power or the like.

8. Slowing down device according to claim 7, characterized in that the piston (2) is assisted hydraulically by means of a pressure cylinder consisting of a cylinder (7b) formed within a fixed cap (7') with a feeding conduit (7c), and of a piston (12) formed at the end of the shank (3) of the piston (2), with as the case may be a feeding conduit (1k) for assisting the spring (4).

9. Slowing down device according to claim 1, characterized in that the rearward portion of the piston (2) is provided with a coaxial orifice (2g) in communication with the central portion (2d-2e), and within which there is accommodated a further unidirectional obturator means (13) mounted in opposition relative to said means (5).

**Patentansprüche**

1. Abdrosselungsvorrichtung für hydraulische Druckflüssigkeit, die zwischen einem Verteilungselement und einem Empfangselement zwischengeschaltet ist und ein Gehäuse (1) aufweist, dessen die eine Endfläche (1a) mit einer Bohrung (1c) versehen ist, die sich in einer Fluchtlinie mit einer Rohrleitung (D1) für die Zuführung der Druckflüssigkeit befindet und einen am wenigstens teilweise ausgehöhlten, für abgedichtete, federnde Verschiebung und verstellbare Positionierung montierten Kolben (2) aufnimmt, wobei die genannte Bohrung durch drei in der Quere gerichteten Auswahlöffnungen (1g-1h-1i), nämlich eine Vorderöffnung (erste Öffnung (1g)), eine mittige Öffnung (zweite Öffnung (1h)) und eine Hinteröffnung (dritte Öffnung (1i)) mit einer Parallelrohrleitung (1e) in Verbindung steht, die sich in einer Fluchtlinie mit einer Rohrleitung (D2) für die Verteilung der Druckflüssigkeit auf das Empfangselement befindet, und der genannte Kolben, auf dessen der Zuführungsrohrleitung entgegenstehendem Ende, ein für einzelgerichtete Bewegung und zum Verhindern des Durchlaufens der Druckflüssigkeit durch den Kolben hindurch in der Richtung des Abflusses von dem Verteilungselement nach dem Empfangselement vorgesehenes Verschlussmittel (5) sowie ein Mittel zum fortschreitenden Durchlaufen der Druckflüssigkeit durch die besagte, infolge der Rückbewegung des Kolbens ungedeckte erste Öffnung (1g) aufweist, während die Druckflüssigkeit bei der umgekehrten Bewegung durch die genannte zweite Öffnung (1h) durchlaufen kann, die in einem mittigen Teil (2d-2e) des Kolbens mündet, der zum Durchlaufen der Druckflüssigkeit durch das für einzelgerichtete Bewegung vorgesehene Verschlussmittel (5) hindurch eingerichtet wird.

2. Abdrosselungsvorrichtung nach Anspruch 1, dadurch gekennzeichnet, dass das Mittel für das fortschreitende Durchlaufen der Druckflüssigkeit aus einer kegeligen Aussenlauffläche (2f) des Kolbens (2) besteht, die besagte erste Öffnung (1g) bei der Rückbewegung des Kolbens infolge des Drucks der Flüssigkeit fortschreitend freimacht.

3. Abdrosselungsvorrichtung nach Anspruch 2, dadurch gekennzeichnet, dass die Kegelformgebung der Aussenlauffläche (2f) des Kolbens etwa 2°30 bis 3° beträgt.

4. Abdrosselungsvorrichtung nach Anspruch 1, dadurch gekennzeichnet, dass der Kolben (2) vermittels einer Spiralfeder (4) in die Vorderstellung und in Abstützung gegen den Boden der Bohrung (1c) wiedervorgerückt wird, wobei das Spannen der Feder durch Zwischenschalten einer oder mehrerer Scheiben (11) eingestellt wird.

5. Abdrosselungsvorrichtung nach Anspruch 1, dadurch gekennzeichnet, dass der Arbeitshub des Kolbens (2) durch die Verbindung des genannten Kolbens mit einem Schaft (3) verstellbar ist, wobei das mit Gewinde versehene Hinterende (3b) mit einer Kappe (7) zusammenwirkt, die für geführte Verschiebung in bezug auf das Gehäuse (1) und mit Blockieren in der Stellung montiert ist.

6. Abdrosselungsvorrichtung nach Anspruch 1, dadurch gekennzeichnet, dass die hinter dem Kolben (2) befindliche, durch die dritte Öffnung (1i) mit der Parallelrohrleitung (1e) in Verbindung stehende Druckflüssigkeit durch ein Verstellorgan (6) der Abflussmenge durchfliesst, wobei das besagte Verstellorgan aus einer Verjüngung (1f) der besagten Parallelrohrleitung (1e) und einer Schraube besteht, und ein Kegelende (6d) der besagten Schraube (6) die genannte Verjüngung durchsetzt, indem der Arbeitshub der genannten Schraube eingeschränkt und die Stellung verstellbar sind.

7. Abdrosselungsvorrichtung nach Anspruch 6, dadurch gekennzeichnet, dass der Kolben (2) und das Verstellorgan der Abflussmenge in beliebig bekannter Weise hydraulisch, elektrisch oder desgleichen beigesteuert sind.

8. Abdrosselungsvorrichtung nach Anspruch 7, dadurch gekennzeichnet, dass der Kolben (2) mittels eines Druckzylinders hydraulisch beigesteuert wird, der aus einem in einer feststehenden Kappe (7') mit einer Zuführungsrohrleitung (7c) gebildeten Zylinder (7b) sowie aus einem am Ende des Schafts (3) des Kolbens (2) gebildeten Kolben (12) besteht, wobei eine Zuführungsrohrleitung (1k) zur Beisteuerung der Feder (4) allfällig vorgesehen werden kann.

9. Abdrosselungsvorrichtung nach Anspruch 1, dadurch gekennzeichnet, dass der Hinterteil des Kolbens (2) mit einer mit dem mittigen Teil (2d-2e) in Verbindung stehende, gleichachsige Öffnung (2g) versehen ist, in welcher ein weiteres, für einzelgerichtete Bewegung vorgesehenes Verschlussmittel (13) untergebracht und in Gegenüberstellung zum besagten Mittel (5) montiert ist.

FIG.1

FIG.2

FIG.3

FIG.4

F

FIG.5